# EUROPEAN PATENT APPLICATION

(11) **EP 4 668 093 A1**
(43) Date of publication of application: **24.12.2025**
(21) Application number: 25164594.1
(22) Date of filing: 18.03.2025
(51) Int. Cl.: G06F 3/12, G06F 21/60, H04L 9/40

(54) **INFORMATION PROCESSING APPARATUS, INFORMATION PROCESSING SYSTEM, AND INFORMATION PROCESSING METHOD**

(30) Priority: 18.06.2024 JP 2024098252
(71) Applicant: Toshiba TEC Kabushiki Kaisha, Tokyo 141-8562 (JP)
(72) Inventor: Miyazaki, Sou, Tokyo, 141-8562 (JP)
(74) Representative: Bandpay & Greuter

(57) **Abstract**

According to one embodiment, an information processing apparatus includes a communication processing unit and a setting unit. The communication processing unit receives information regarding issuing of a second account associated with a first account input by a terminal. The setting unit sets one or both of an issuing authority of a printing job in the second account and an execution authority for the printing job related to the second account based on the information received by the communication processing unit.

## Description

### FIELD

Embodiments described herein relate generally to an information processing apparatus, an information processing system, and an information processing method.

### BACKGROUND

To permit users who do not generate accounts to perform printing temporarily, it is general to issue guest accounts to the users.

The issuing of the guest accounts is performed on the assumption that the same users issue printing jobs and execute the printing jobs.

### DESCRIPTION OF THE DRAWINGS

FIG. 1 is a block diagram illustrating an overview of a configuration example of a printing management system according to an embodiment;
FIG. 2 is a block diagram illustrating an overview of a configuration example of an image forming apparatus;
FIG. 3 is a block diagram illustrating an overview of a configuration example of a server;
FIG. 4 is a block diagram illustrating an overview of a configuration example of a terminal;
FIG. 5 is a sequence diagram illustrating a process related to issuing of a slave account;
FIG. 6 is a diagram illustrating a display example related to issuing of a slave account in the terminal;
FIG. 7 is a sequence diagram illustrating a process related to issuing of a printing job;
FIG. 8 is a diagram illustrating a display example related to issuing of a printing job in a master account in the terminal;
FIG. 9 is a diagram illustrating a display example related to issuing of a printing job in a slave account in the terminal;
FIG. 10 is a sequence diagram illustrating a process related to a printing job list; and
FIG. 11 is a flowchart illustrating a process of generating a printing job list by the server.

### DETAILED DESCRIPTION

In general, exemplary embodiments of the systems and methods as described herein provide a technology for enabling flexible setting of an authority related to printing.

In general, according to one embodiment, an information processing apparatus includes a communication processing unit and a setting unit. The communication processing unit receives information regarding issuing of a second account associated with a first account input by a terminal. The setting unit sets one or both of an issuing authority of a printing job in the second account and an execution authority for the printing job related to the second account based on the information received by the communication processing unit.

Hereinafter, several embodiments will be described with reference to the drawings. In the drawings used to describe the following embodiments, scales of units are changed as appropriate. In the drawings used to describe the following embodiments, configurations are omitted for description.

### [Embodiment]

### (Configuration Example)

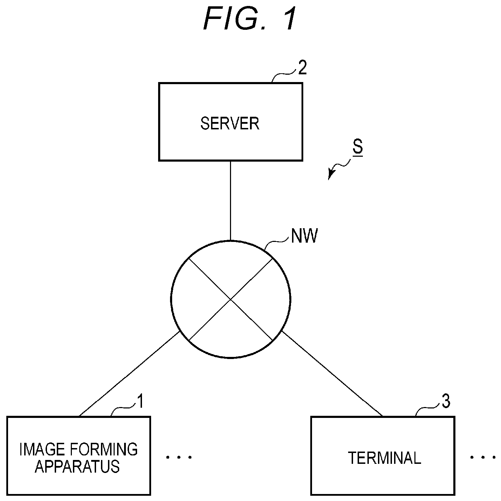

FIG. 1 is a block diagram illustrating an overview of an of a configuration of a printing management system S.

The printing management system S is a system that manages printing.

The printing management system S includes a plurality of image forming apparatuses 1, a server 2, and a plurality of terminals 3. The plurality of image forming apparatuses 1, the server 2, and the plurality of terminals 3 are connected to be able to communicate with each other via a network NW. The network NW includes one or more networks such as the Internet, a mobile network, and a local area network (LAN). The LAN may be a wireless LAN or a wired LAN. The printing management system S may include one image forming apparatus 1 instead of the plurality of image forming apparatuses. The printing management system S may include one terminal 3 instead of the plurality of terminals. The printing management system S is an example of an information processing system including at least two apparatuses.

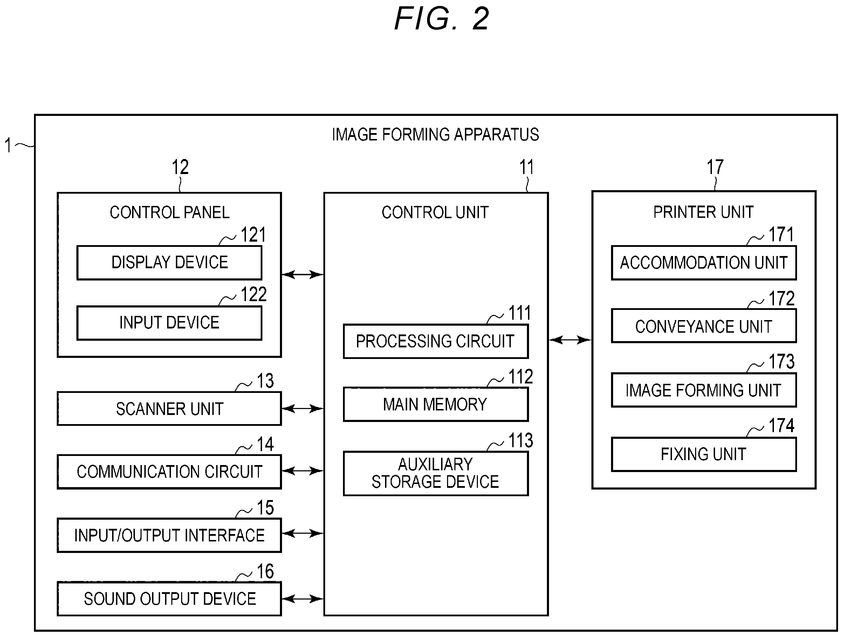

FIG. 2 is a block diagram illustrating an overview of an example of a configuration of an image forming apparatus 1.

The image forming apparatus 1 is an apparatus that has a function of forming an image on a sheet. The forming of the image on the sheet corresponds to printing on a sheet. For example, the image forming apparatus 1 is a multifunction peripheral (MFP). The MFP is a digital multifunction peripheral that utilizes functions of various office apparatuses comprehensively. The MFP is an apparatus that has a function of forming an image on a sheet, a copy function of scanning and reading an image with a designated resolution and a sheet size, an image reception function by a FAX, an image reception function by an E-mail, a printing image reception function by the network NW, and the like. The image forming apparatus 1 communicates with the server 2 by executing an application method.

The image forming apparatus 1 includes a control unit 11, a control panel 12, a scanner unit 13, a communication circuit 14, an input/output interface 15, a sound output device 16, and a printer unit 17. The control unit 11, the control panel 12, the scanner unit 13, the communication circuit 14, the input/output interface 15, the sound output device 16, and the printer unit 17 are connected to allow for input and output signals to one another.

The control unit 11 controls an operation of each unit of the image forming apparatus 1. The control unit 11 includes a processing circuit 111, a main memory 112, and an auxiliary storage device 113.

The processing circuit 111 corresponds to a central unit of the image forming apparatus 1. The processing circuit 111 is an element included in a computer of the image forming apparatus 1. The processing circuit 111 includes one or more circuits that execute a plurality of processes by a plurality of functions. For example, the circuits are a processor, an application specific integrated circuit (ASIC), or a field-programmable gate array (FPGA), but an exemplary embodiment is not limited thereto. For example, the processor is a central processing unit (CPU) or a graphics processing unit (GPU), but an exemplary embodiment is not limited thereto. The processing circuit 111 loads a program stored in the main memory 112 or the auxiliary storage device 113 to the main memory 112. The processing circuit 111 can execute various processes by executing programs loaded to the main memory 112. The processing circuit 111 is an example of a processing unit of the image forming apparatus 1.

The main memory 112 corresponds to a main storage unit of the image forming apparatus 1. The main memory 112 is an element included in the computer of the image forming apparatus 1. The main memory 112 includes a nonvolatile memory area and a volatile memory area. The main memory 112 stores an operating system or a program in the nonvolatile memory area. The main memory 112 uses the volatile memory area as a work area in which data can be appropriately rewritten by the processing circuit 111. For example, the main memory 112 includes a read only memory (ROM) as the nonvolatile memory area. For example, the main memory 112 includes a random access memory (RAM) as the volatile memory area.

The auxiliary storage device 113 corresponds to an auxiliary storage unit of the image forming apparatus 1. For example, the auxiliary storage device 113 includes a hard disk drive (HDD). The auxiliary storage device 113 may include a semiconductor storage medium such as a solid state drive (SSD) in addition to the HDD or instead of the HDD. The auxiliary storage device 113 stores the above-described programs, data used for the processing circuit 111 to execute various processes, and data generated through a process of the processing circuit 111.

The control panel 12 includes a display device 121 and an input device 122.

The display device 121 is a device capable of displaying an image. The display device 121 is a liquid crystal display, an organic electroluminescence (EL) display, or the like, but an exemplary embodiment is not limited thereto. The display device 121 is an example of a display unit of the image forming apparatus 1.

The input device 122 is a device capable of inputting an instruction in response to a user operation. The input device 122 may include a button that can be pressed. The input device 122 may be a touch panel integrated with the display device 121. The input device 122 is an example of an input unit of the image forming apparatus 1.

The scanner unit 13 is a device that reads an image such as text, a figure, or a photo depicted at a predetermined position on a sheet. The scanner unit 13 includes a line sensor. The line sensor may be of a charge coupled device (CCD) type. The line sensor may be of a contact image sensor (CIS) type. The scanner unit 13 generates image data based on an image read using the line sensor. The scanner unit 13 transmits generated image data to the control unit 11. The control unit 11 stores the received image data in the auxiliary storage device 113 or transmits the received image data to the printer unit 17.

The communication circuit 14 is an interface that inputs or outputs information. The communication circuit 14 connects the image forming apparatus 1 to another apparatus via the network NW. The communication circuit 14 is an example of a communication unit of the image forming apparatus 1.

The input/output interface 15 is an interface that connects the image forming apparatus 1 to an external apparatus. The input/output interface 15 includes a connector of a wired cable.

The sound output device 16 is a device capable of outputting a sound under the control of the processing circuit 111. For example, the sound output device 16 is a speaker.

The printer unit 17 is a unit that forms an image on a sheet. The printer unit 17 can form an image on a sheet based on a printing job.

The printer unit 17 includes an accommodation unit 171, a conveyance unit 172, an image forming unit 173, and a fixing unit 174. The printer unit 17 is an example of a printing unit of the image forming apparatus 1.

The accommodation unit 171 accommodates sheets.

The conveyance unit 172 conveys a sheet in the printer unit 17.

The image forming unit 173 forms a toner image on a sheet. The image forming unit 173 includes an intermediate transfer belt, a plurality of developing units, an exposure unit, and a transfer unit.

The fixing unit 174 provides heat and pressure to a sheet on which a toner image supplied from the image forming unit 173 is formed. The fixing unit 174 forms an image on the sheet by fixing the toner image formed on the sheet to the sheet by the heat and pressure.

A hardware configuration of the image forming apparatus 1 is not limited to the above-described configuration. In the image forming apparatus 1, the above-described constituent elements can be omitted and changed, and new constituent elements can be added.

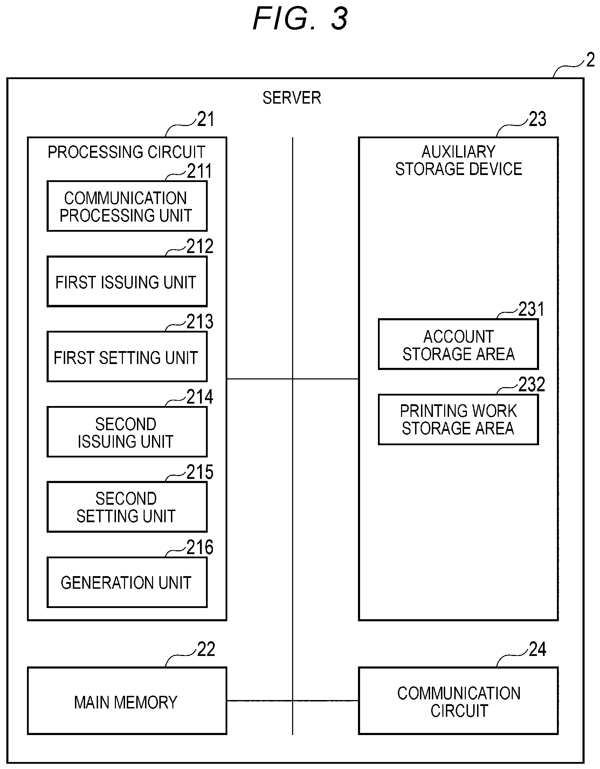

FIG. 3 is a block diagram illustrating an overview of an example configuration of the server 2.

The server 2 is an apparatus that processes information for managing printing. The server 2 temporarily accumulates printing jobs issued in response to a printing job issuing request from the terminal 3. The printing job issuing request is a request for issuing a printing job. A printing job includes a printing file indicating content of printing. A printing job includes printing parameters. The printing parameters include various parameters such as the number of printing copies, sheet sizes, color selected from monochrome and color, and a printing a surface selected from one side and double sides. The server 2 transmits an appropriate printing job to the image forming apparatus 1 in response to a request from the image forming apparatus 1. The server 2 has a function of managing an account and a function of managing a printing job in association with the account. The server 2 is an example of an information processing apparatus. The server 2 may be a server on a cloud or may be an on-premises server.

The server 2 includes a processing circuit 21, a main memory 22, an auxiliary storage device 23, and a communication circuit 24. The processing circuit 21, the main memory 22, the auxiliary storage device 23, and the communication circuit 24 are connected to be able to input and output signals one another.

The processing circuit 21 corresponds to a central unit of the server 2. The processing circuit 21 is an element included in a computer of the server 2. The processing circuit 21 includes one or more circuits executing a plurality of processes by a plurality of functions as in the processing circuit 111. The processing circuit 21 loads a program stored in the main memory 22 or the auxiliary storage device 23 to the main memory 22. The program is a program that can cause the processing circuit 21 to execute a process to be described below. The processing circuit 21 can execute various processes by executing programs loaded to the main memory 22.

The main memory 22 includes an element corresponding to a main storage unit of the server 2. The main memory 22 is an element included in the computer of the server 2. The main memory 22 may have a configuration similar to the main memory 112.

The auxiliary storage device 23 corresponds to an auxiliary storage unit of the server 2. The auxiliary storage device 23 includes one or more storage devices as in the auxiliary storage device 113. The auxiliary storage device 23 stores the above-described program, data that is used for the processing circuit 21 to perform various processes, and data that is generated through a process of the processing circuit 21. The auxiliary storage device 23 is an example of a storage unit of the server 2.

The auxiliary storage device 23 includes an account storage area 231 for managing an account. The account storage area 231 stores one or more master accounts. The master account is an account that issues a slave account. The master account is also referred to as a first account.

For each master account, the account storage area 231 stores one or more slave accounts associated with the master account. The slave account is a gest account issued in association with the master account. The slave account is a different account from the master account. The slave account is also referred to as a second account. When a password is set in the slave account, the account storage area 231 stores the password associated with the slave account.

For each slave account, the account storage area 231 stores information associated with the slave account. The information associated with the slave account includes a valid period information, issuing authority setting information, execution authority setting information, and expense burden setting information.

The valid period information is information indicating a valid period. The valid period is a deadline in which the slave account is valid.

The issuing authority setting information is information regarding setting of an issuing authority. The issuing authority is an issuing authority of a printing job in a slave account. The issuing authority is an authority for the slave account to issue a printing job. The authority for the slave account to issue a printing job includes a meaning of an authority for a user to transmit a printing job issuing request with the slave account from the terminal 3. For example, the issuing authority setting information is information indicating that the issuing authority is set or the issuing authority is not set. The setting of the issuing authority includes permission of the issuing authority. The non-setting of the issuing authority includes non-permission of the issuing authority.

The execution authority setting information is information regarding setting of the execution authority. For example, the execution authority setting information is information indicating that the execution authority is set and the execution authority is not set. The execution authority is an execution authority for a printing job related to the slave account. The printing job related to the slave account is at least one of a printing job that is issued by the slave account and a printing job that can be executed by the slave account. The execution authority for a printing job related to the slave account includes a meaning of an authority to transmit a request for the printing job from the image forming apparatus 1.

The execution authority includes a first execution authority that is an example of an execution authority related to a printing job issued by the slave account. The first execution authority is an execution authority in the master account for the printing job issued by the slave account. The first execution authority can also be an authority for the master account to execute a printing job issued by the slave account.

The execution authority setting information can include first execution authority setting information. The first execution authority setting information is information regarding setting of the first execution authority. For example, the first execution authority setting information is information indicating that the first execution authority is set or the first execution authority is not set. The setting of the first execution authority includes permission of the first execution authority. The non-setting of the first execution authority includes non-permission of the first execution authority.

The execution authority can include a second execution authority that is an example of an execution authority related to a printing job that is issued by the slave account and can be executed by the slave account. The second execution authority is an execution authority in the slave account for a printing job issued by the slave account. The second execution authority can also be an authority for the slave account to execute a printing job issued by the slave account.

The execution authority setting information can include second execution authority setting information. The second execution authority setting information is information regarding setting of the second execution authority. For example, the second execution authority setting information is information indicating that the second execution authority is set or the second execution authority is not set. The setting of the second execution authority includes permission of the second execution authority. The non-setting of the second execution authority includes non-permission of the second execution authority.

The execution authority can include a third execution authority that is an example of an execution authority related to a printing job that can be executed by the slave account. The third execution authority is an execution authority in the slave account for a printing job that is issued by the master account. The third execution authority can also be an authority for the slave account to execute a printing job that is issued by the master account.

The execution authority setting information includes third execution authority setting information. The third execution authority setting information is information related to setting of the third execution authority. For example, the third execution authority setting information is information indicating that the third execution authority is set or the third execution authority is not set. The setting of the third execution authority includes permission of the third execution authority. The non-setting of the third execution authority includes non-permission of the third execution authority.

The expense burden setting information is information related to setting of expense burden. The expense burden is an expense burden associated with execution of a printing job related to the slave account. The expense burden is the master account or the slave account covering a printing cost. Here, the expense burden is the same in any case of a case in which the master account executes a printing job issued by the slave account, a case in which the slave account executes a printing job issued by the slave account, and a case in which the slave account executes a printing job issued by the master account, but may be different for each case. For example, the expense burden setting information is information indicating the master account or the slave account as the expense burden.

The auxiliary storage device 23 includes a printing job storage area 232 for managing printing job in association with an account.

The printing job storage area 232 stores one or more printing jobs. A unique ID can be allocated to a printing job. The printing job is issued by the master account in some cases and issued by the slave account in some cases. For each printing job, the printing job storage area 232 stores information associated with the printing job.

The information associated with the printing job includes information indicating an account issuing the printing job and information indicating an account permitted to execute the printing job. The account issuing the printing job is the master account or the slave account. The account permitted to execute the printing job is one or both of the master account and the slave account. The master account is permitted to execute the printing job issued by the master account. Therefore, the master account is permitted to execute a printing job issued by the master account even when the slave account is permitted to execute the printing job issued by the master account.

The communication circuit 24 is an interface that inputs and outputs information. The communication circuit 24 communicably connects the server 2 to another apparatus via the network NW. The communication circuit 24 is an example of a communication unit of the server 2.

A hardware configuration of the server 2 is not limited to the above-described configuration. In the server 2, the above-described constituent elements can be omitted and changed appropriately and new constituent elements can be added.

Each unit implemented by the processing circuit 21 will be described.

The processing circuit 21 implements a communication processing unit 211, a first issuing unit 212, a first setting unit 213, a second issuing unit 214, a second setting unit 215, and a generation unit 216. Each unit implemented by the processing circuit 21 can also be a function. Each unit implemented by the processing circuit 21 can also be implemented by a control unit including the processing circuit 21 and the main memory 22.

The communication processing unit 211 communicates with another apparatus via the communication circuit 24.

The first issuing unit 212 issues a slave account associated with the first account in response to an account issuing request. The issuing of the slave account includes enabling to use the slave account. The account issuing request is a request for issuing the slave account.

The first setting unit 213 sets a fact related to the slave account. The fact related to the slave account is a parameter set in association with issuing of the slave account. For example, the fact related to the slave account include some or all of a valid period, an issuing authority, an execution authority, and expense burden.

The second issuing unit 214 issues a printing job in response to a printing job issuing request. The issuing of the printing job includes enabling to use the printing job.

The second setting unit 215 sets a fact related to a printing job. The fact related to the printing job is a parameter set in association with issuing of the printing job. For example, the fact related to the printing job includes an account issuing a printing job and an account permitted to execute a printing job.

The generation unit 216 generates a printing job list. The printing job list is a list indicating one or more printing jobs that can be executed by an account logged into the image forming apparatus 1. One or more printing jobs indicated in the printing job list include all the printing jobs that can be executed by the logged-in account. A printing job that can be executed by an account is a printing job that the account is permitted to execute.

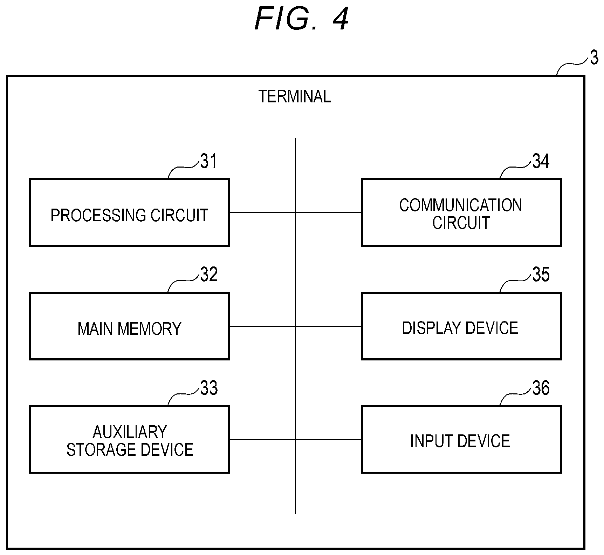

FIG. 4 is a block diagram illustrating an overview of a configuration example of the terminal 3.

The terminal 3 is an apparatus that processes information. he terminal 3 can transmit an account issuing request to the server 2 by executing an application program. The terminal 3 can transmit a printing job issuing request to the server 2 by executing an application program. For example, the terminal 3 is a personal computer (PC), a tablet terminal, or a smartphone, but an exemplary embodiment is not limited thereto.

The terminal 3 includes a processing circuit 31, a main memory 32, an auxiliary storage device 33, and a communication circuit 34. The processing circuit 31, the main memory 32, the auxiliary storage device 33, and the communication circuit 34 are connected to input and output signals one another.

The processing circuit 31 corresponds to a central unit of the terminal 3. The processing circuit 31 is an element included in a computer of the terminal 3. The processing circuit 31 includes one or more circuits executing a plurality of processes by a plurality of functions as in the processing circuit 111. The processing circuit 31 loads a program stored in the main memory 32 or the auxiliary storage device 33 to the main memory 32. The program is a program that can cause the processing circuit 31 to execute a process to be described below. The processing circuit 31 can execute various processes by executing programs loaded to the main memory 32.

The main memory 32 includes an element corresponding to a main storage unit of the terminal 3. The main memory 32 is an element included in the computer of the terminal 3. The main memory 32 may have a configuration similar to the main memory 112.

The auxiliary storage device 33 corresponds to an auxiliary storage unit of the terminal 3. The auxiliary storage device 33 includes one or more storage devices as in the auxiliary storage device 113. The auxiliary storage device 33 stores the above-described program, data that is used for the processing circuit 31 to perform various processes, and data that is generated through a process of the processing circuit 31. The auxiliary storage device 33 is an example of a storage unit of the terminal 3.

The communication circuit 34 is an interface that inputs and outputs information. The communication circuit 34 communicably connects the terminal 3 to another apparatus via the network NW. The communication circuit 34 is an example of a communication unit of the terminal 3.

A hardware configuration of the terminal 3 is not limited to the above-described configuration. In the terminal 3, the above-described constituent elements can be omitted and changed appropriately and new constituent elements can be added.

### (Processing Example)

A process of the printing management system S will be described.

A processing procedure to be described below is merely exemplary and each process may be modified as necessary. In the processing procedure to be described below, steps can be omitted, replaced, and added appropriately depending on an embodiment.

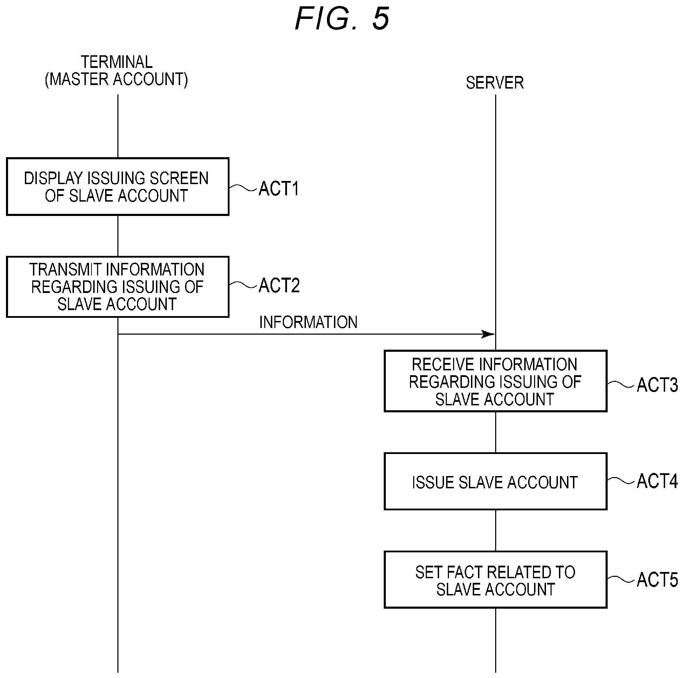

FIG. 5 is a sequence diagram illustrating a process related to issuing of a slave account.

Here, it is assumed that a user that has a master account operates the terminal 3 to issue a slave account.

The processing circuit 31 of the terminal 3 causes a display device 35 to display an issuing screen of the slave account (ACT1). The issuing screen of the slave account is an image for inputting information regarding issuing of the slave account via an input device 36. In ACT1, for example, the processing circuit 31 causes the display device 35 to display the issuing screen of the slave account in response to a press of a slave account issuing button. In the slave account, there is no authority to issue the slave account. Therefore, in the terminal 3 operated by the user who has the slave account, the slave account issuing button cannot be operated through displaying or the like in a non-display or invalid state.

Information regarding the issuing of the slave account includes a master account. The information regarding the issuing of the slave account includes a slave account associated with the master account. Wen the user sets a password for the slave account, the information regarding the issuing of the slave account includes a password associated with the slave account. The information regarding the issuing of the slave account includes a valid period. The information regarding the issuing of the slave account includes expense burden.

When the user permits the issuing authority, the information regarding the issuing of the slave account includes information for permitting the issuing authority. The information regarding the issuing of the slave account includes information for permitting the execution authority. When the user permits the first execution authority, the information regarding the issuing of the slave account can include information for permitting the first execution authority. When the user permits the second execution authority, the information regarding the issuing of the slave account can include information for permitting the second execution authority. When the user permits the third execution authority, the information regarding the issuing of the slave account can include information for permitting the third execution authority.

The processing circuit 31 of the terminal 3 transmits the account issuing request including the information regarding the issuing of the slave account input with the terminal 3 to the server 2 via the communication circuit 34 (ACT2). **In** ACT2, for example, the processing circuit 31 transmits the account issuing request to the server 2 in response to an account issuing instruction input via the input device 36. The account issuing instruction is an instruction to transmit the account issuing request. The transmission of the account issuing request is an example of transmission of information regarding issuing of the slave account input with the terminal 3.

The processing circuit 21 of the server 2 receives an account issuing request including the information regarding the issuing of the slave account input with the terminal 3 from the terminal 3 via the communication circuit 34 (ACT3). ACT3 may be a process performed by the communication processing unit 211. The reception of the account issuing request is an example of reception of information regarding the issuing of the slave account input with the terminal 3.

The processing circuit 21 of the server 2 issues the slave account in response to the received account issuing request (ACT4). ACT4 may be a process performed by the first issuing unit 212. The response to the received account issuing request is an example of response to information regarding the issuing of the received slave account. **In** ACT4, for example, the processing circuit 21 issues the slave account based on the slave account included in the information regarding the issuing of the slave account. The processing circuit 21 stores the issued slave account in the account storage area 231. When the information regarding the issuing of the slave account includes a password associated with the slave account, the processing circuit 21 stores the password in the account storage area 231.

The processing circuit 21 of the server 2 sets a fact related to the slave account based on the received account issuing request (ACT5). ACT5 may be a process performed by the first setting unit 213. In ACT5, for example, the processing circuit 21 sets a valid period based on the valid period included in the information regarding the issuing of the slave account. The processing circuit 21 stores valid period information indicating the set valid period in the account storage area 231.

When the information regarding the issuing of the slave account includes information for permitting the issuing authority, the processing circuit 21 sets the issuing authority. In this case, the processing circuit 21 stores issuing authority setting information indicating that the issuing authority is set in the account storage area 231. Conversely, when the information regarding the issuing of the slave account does not include the information for permitting the issuing authority, the processing circuit 21 does not set the issuing authority. In this case, the processing circuit 21 stores issuing authority setting information indicating that the issuing authority is not set in the account storage area 231.
when the information regarding the issuing of the slave account includes information for permitting the execution authority, the processing circuit 21 sets the execution authority. In this case, the processing circuit 21 stores the execution authority setting information indicating that the execution authority is set in the account storage area 231. Conversely, when the information regarding the issuing of the slave account does not include information for permitting the execution authority, the processing circuit 21 does not set the execution authority. In this case, the processing circuit 21 stores the execution authority setting information indicating that the execution authority is not set in the account storage area 231.

When the information regarding the issuing of the slave account includes information for permitting the first execution authority, the processing circuit 21 can set the first execution authority. In this case, the processing circuit 21 stores the first execution authority setting information indicating that the first execution authority is set in the account storage area 231. Conversely, when the information regarding the issuing of the slave account does not include information for permitting the first execution authority, the processing circuit 21 does not set the first execution authority. In this case, the processing circuit 21 stores the first execution authority setting information indicating that the first execution authority is not set in the account storage area 231.

When the information regarding the issuing of the slave account includes information for permitting the second execution authority, the processing circuit 21 can set the second execution authority. In this case, the processing circuit 21 stores the second execution authority setting information indicating that the second execution authority is set in the account storage area 231. Conversely, when the information regarding the issuing of the slave account does not include the information for permitting the second execution authority, the processing circuit 21 does not set the second execution authority. In this case, the processing circuit 21 stores the second execution authority setting information indicating that the second execution authority is not set in the account storage area 231.

When the information regarding the issuing of the slave account includes information for permitting the third execution authority, the processing circuit 21 can set the third execution authority. In this case, the processing circuit 21 stores the third execution authority setting information indicating that the third execution authority is set in the account storage area 231. Conversely, when the information regarding the issuing of the slave account does not include the information for permitting the third execution authority, the processing circuit 21 does not set the third execution authority. In this case, the processing circuit 21 stores the third execution authority setting information indicating that the third execution authority is not set in the account storage area 231.

The processing circuit 21 sets expense burden based on the expense burden included in the information regarding the issuing of the slave account. The processing circuit 21 stores the expense burden setting information indicating the set expense burden in the account storage area 231.

The processing circuit 21 periodically confirms the valid period stored in the account storage area 231. The processing circuit 21 deletes the slave account of which the valid period expires from the account storage area 231.

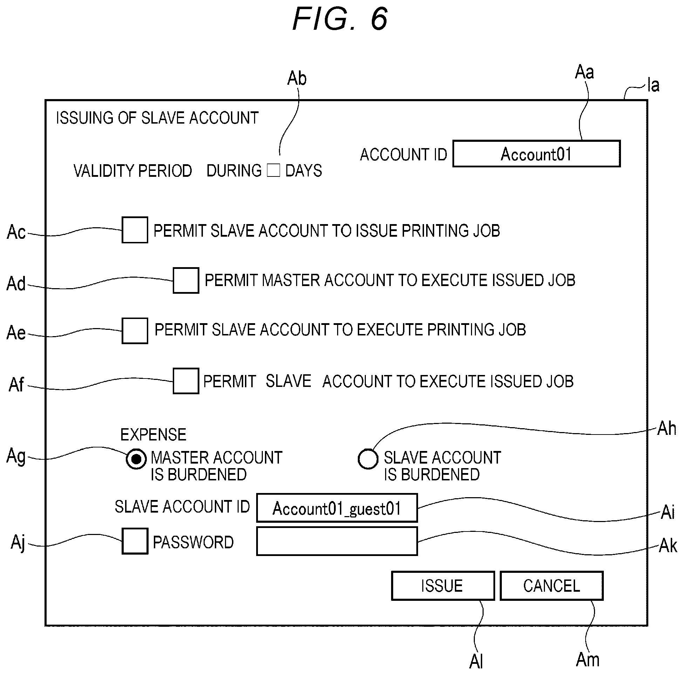

FIG. 6 is a diagram illustrating a display example related to issuing of a slave account in the terminal 3. The display device 35 of the terminal 3 displays an issuing screen Ia of the slave account.

The issuing screen Ia of the slave account includes an input field Aa for inputting the master account that intends to issue the slave account.

The issuing screen Ia of the slave account includes an input field Ab for inputting the valid period.

The issuing screen Ia of the slave account includes an input field Ac for inputting permission of the issuing authority.

The issuing screen Ia of the slave account includes an input field Ad for inputting permission of the first execution authority. When the slave account is input as expense burden in an input field Ah, the input field Ad may not be displayed or may be displayed in an invalid state.

The issuing screen Ia of the slave account includes an input field Ae for inputting permission of the second execution authority.

The issuing screen Ia of the slave account includes an input field Af for inputting permission of the third execution authority.

The issuing screen Ia of the slave account includes an input field Ag for inputting the master account as expense burden. In this case, a printing record is recorded as a printing record of the master account.

The issuing screen Ia of the slave account includes the input field Ah for inputting the slave account as expense burden. In this case, for example, the user who has the slave account is requested to pay expense in printing by a coin controller or the like.

The issuing screen Ia of the slave account includes an input field Ai for inputting the slave account associated with the master account.

The issuing screen Ia of the slave account includes an input field Aj for inputting setting of a password in the slave account.

The issuing screen Ia of the slave account includes an input field Ak for inputting password in association with the slave account.

The issuing screen Ia of the slave account includes an issuing button Al for inputting an account issuing instruction.

The issuing screen Ia of the slave account includes a cancelation button Am for canceling an input of information regarding issuing of the slave account.

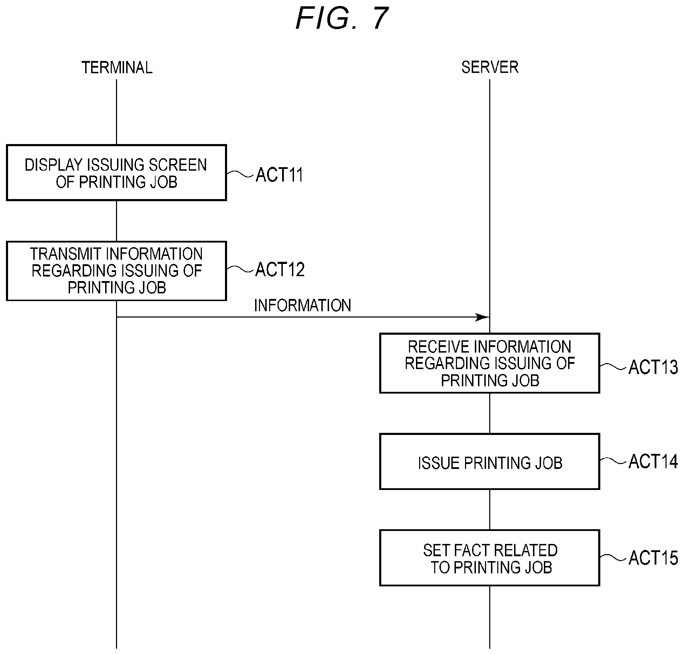

FIG. 7 is a sequence diagram illustrating a process related to issuing of a printing job.

Here, it is assumed that the user operates the terminal 3 to issue a printing job.

The processing circuit 31 of the terminal 3 causes the display device 35 to display the issuing screen of the printing job (ACT11). The issuing screen of the printing job is an image for inputting information regarding the issuing of the printing job via the input device 36. In ACT11, for example, the processing circuit 31 causes the display device 35 to display the issuing screen of the printing job in response to the press of a printing job issuing button.

The information regarding the issuing of the printing job includes a printing file and printing parameters. The information regarding the issuing of the printing job includes information indicating an account issuing the printing job. The information regarding the issuing of the printing job includes information indicating an account permitted to execute the printing job.

When the user who has the master account operates the terminal 3 to issue the printing job, an account issuing a printing job is the master account. When the third execution authority is set, an account permitted to execute the printing job is the master account in some cases or is the master account and the slave account in some cases.

When the user who has the slave account operates the terminal 3 to issue the printing job, an account issuing a printing job is the slave account. When the first execution authority is set and the second execution authority is not set, an account permitted to execute the printing job is the master account. When the second execution authority is set and the first execution authority is not set, an account permitted to execute the printing job is the slave account. When the first execution authority and the second execution authority are set, an account permitted to execute the printing job is the master account in some cases or is the slave account in some cases.

The processing circuit 31 of the terminal 3 transmits a printing job issuing request including the information regarding the issuing of the printing job input with the terminal 3 to the server 2 via the communication circuit 34 (ACT12). In ACT12, for example, the processing circuit 31 transmits the printing job issuing request to the server 2 in response to a printing job issuing instruction input via the input device 36. The printing job issuing instruction is an instruction to transmit the printing job issuing request. The transmission of the printing job issuing request is an example of transmission of information regarding the issuing of the printing job input with the terminal 3.

The processing circuit 21 of the server 2 receives the printing job issuing request including information regarding the issuing of the printing job input with the terminal 3 from the terminal 3 via the communication circuit 34 (ACT13). ACT13 may be a process performed by the communication processing unit 211. The reception of the printing job issuing request is an example of reception of the information regarding the issuing of the printing job input with the terminal 3.

The processing circuit 21 of the server 2 issues the printing job in response to the received printing job issuing request (ACT14). ACT14 may be process performed by the second issuing unit 214. The response to the received printing job issuing request is an example of response to information regarding the issuing of the received printing job. In ACT14, for example, the processing circuit 21 issues the printing job based on the printing file and the printing parameters included in the information regarding the issuing of the printing job. The processing circuit 21 stores the issued printing job in the printing job storage area 232.

The processing circuit 21 of the server 2 sets a fact related to the printing job based on the received printing job issuing request (ACT15). ACT15 may be a process performed by the second setting unit 215. In ACT15, for example, the processing circuit 21 sets an account issuing the printing job based on the information indicating the account issuing the printing job included in the information regarding the issuing of the printing job. The processing circuit 21 stores information indicating the set account issuing the printing job in the printing job storage area 232. The processing circuit 21 sets the account permitted to execute the printing job based on the information indicating the account permitted to execute the printing job included in the information regarding the issuing of the printing job. The processing circuit 21 stores the information indicating the set account permitted to execute the printing job in the printing job storage area 232.

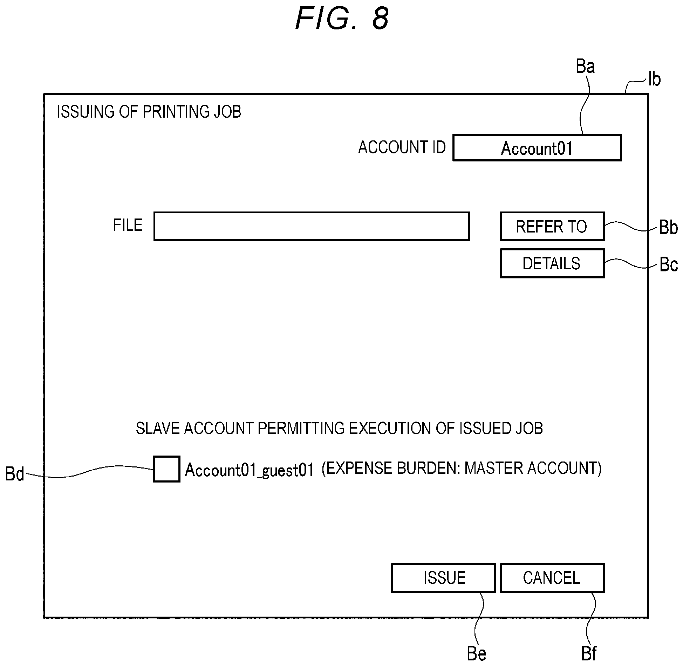

FIG. 8 is a diagram illustrating a display example related to issuing of a printing job in a master account in the terminal 3.

The display device 35 of the terminal 3 displays an issuing screen Ib of the printing job. The issuing screen Ib of the printing job is an image for issuing the printing job with the master account.

The issuing screen Ib of the printing job includes an input field Ba for inputting the master account as the account issuing the printing job.

The issuing screen Ib of the printing job includes a reference button Bb for designating a printing file.

The issuing screen Ib of the printing job includes a detail button Bc for displaying a detail setting screen on which the printing parameters are input.

The issuing screen Ib of the printing job includes an input field Bd for inputting the slave account as the account permitted to execute the printing job. When the slave account is input in the input field Bd, the information regarding the issuing of the printing job includes information indicating the master account and the slave account as information indicating the account permitted to execute the printing job. In this case, the processing circuit 21 of the server 2 sets the master account and the slave account as accounts permitted to execute the printing job. The processing circuit 21 stores the information indicating the master account and the slave account in the printing job storage area 232 as the information indicating the set accounts permitted to execute the printing job.

When the slave account is not input in the input field Bd, the information regarding the issuing of the printing job includes information indicating the master account as the information indicating the account permitted to execute the printing job. In this case, the processing circuit 21 of the server 2 sets the master account as the account permitted to execute the printing job. The processing circuit 21 stores the information indicating the master account in the printing job storage area 232 as the information indicating the set account permitted to execute the printing job.

When the third execution authority is not set, the input field Bd may not be displayed or may be displayed in an invalid state.

The processing circuit 31 of the terminal 3 can display each slave account satisfying a condition as an option in association with the input field Bd in the issuing screen Ib of the printing job. The condition is that the slave account is associated with the master account and the third execution authority is set. The processing circuit 31 can display the expense burden associated with each slave account satisfying the condition on the issuing screen Ib of the printing job.

In this example, the processing circuit 31 transmits a request including the master account input in the input field Ba to the server 2. The processing circuit 21 of the server 2 acquires each slave account satisfying the condition from the account storage area 231 in response to a request. The processing circuit 21 acquires the expense burden associated with each slave account satisfying the condition from the account storage area 231. The processing circuit 21 transmits information indicating each slave account satisfying the condition to the terminal 3. The processing circuit 21 transmits information indicating the expense burden associated with each slave account satisfying the condition to the terminal 3. The processing circuit 31 of the terminal 3 acquires the information indicating each slave account satisfying the condition from the server 2. The processing circuit 31 acquirees information indicating the expense burden associated with each slave account satisfying the condition from the server 2. The processing circuit 31 displays each slave account satisfying the condition on the issuing screen Ib of the printing job. The processing circuit 31 displays the expense burden associated with each slave account satisfying the condition on the issuing screen Ib of the printing job.

The issuing screen Ib of the printing job includes an issuing button Be for inputting a printing job issuing instruction.

The issuing screen Ib of the printing job includes a cancelation button Bf for canceling the input of the information regarding the issuing of the printing job.

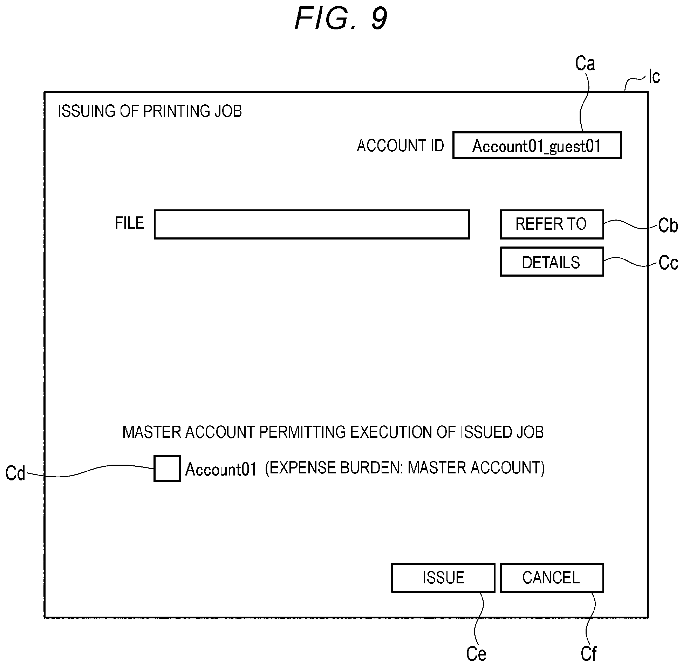

FIG. 9 is a diagram illustrating a display example related to issuing of a printing job in a slave account in the terminal 3.

The display device 35 of the terminal 3 displays an issuing screen Ic of the printing job. The issuing screen Ic of the printing job is an image for issuing the printing job with the slave account.

The issuing screen Ic of the printing job includes an input field Ca for inputting the slave account as the account issuing the printing job.

The issuing screen Ic of the printing job includes a reference button Cb for designating a printing file.

The issuing screen Ic of the printing job includes a detail button Cc for displaying a detail setting screen on which the printing parameters are input.

The issuing screen Ic of the printing job includes an input field Cd for inputting the master account as the account permitted to execute the printing job. When the master account is input in the input field Cd, the information regarding the issuing of the printing job includes information indicating the master account as information indicating the account permitted to execute the printing job. In this case, the processing circuit 21 of the server 2 sets the master account as an account permitted to execute the printing job. The processing circuit 21 stores the information indicating the master account in the printing job storage area 232 as the information indicating the set account permitted to execute the printing job.

When the master account is not input in the input field Cd, the information regarding the issuing of the printing job includes information indicating the slave account as the account permitted to execute the printing job. Here, it is assumed that the second execution authority is set in the slave account. In this case, the processing circuit 21 of the server 2 sets the slave account as the account permitted to execute the printing job. The processing circuit 21 stores the information indicating the slave account in the printing job storage area 232 as the information indicating the set account permitted to execute the printing job.

When the first execution authority is not set, the input field Cd may not be displayed or may be displayed in an invalid state.

The processing circuit 31 of the terminal 3 can display the master account satisfying a condition as an option in association with the input field Cd in the issuing screen Ic of the printing job. The condition is that the master account is associated with the slave account and the first execution authority is set. The processing circuit 31 can display the expense burden associated with each master account satisfying the condition on the issuing screen Ic of the printing job.

In this example, the processing circuit 31 transmits a request including the slave account input in the input field Ca to the server 2. The processing circuit 21 of the server 2 acquires the master account satisfying the condition from the account storage area 231 in response to a request. The processing circuit 21 acquires the expense burden associated with the master account satisfying the condition from the account storage area 231. The processing circuit 21 transmits information indicating the master account satisfying the condition to the terminal 3. The processing circuit 21 transmits information indicating the expense burden associated with the master account satisfying the condition to terminal 3. The processing circuit 31 of the terminal 3 acquires the information indicating the master account satisfying the condition from the server 2. The processing circuit 31 acquirees information indicating the expense burden associated with the master account satisfying the condition from the server 2. The processing circuit 31 displays the master account satisfying the condition on the issuing screen Ic of the printing job. The processing circuit 31 displays the expense burden associated with the master account satisfying the condition on the issuing screen Ic of the printing job.

The issuing screen Ic of the printing job includes an issuing button Ce for inputting a printing job issuing instruction.

The issuing screen Ic of the printing job includes a cancelation button Cf for canceling the input of the information regarding the issuing of the printing job.

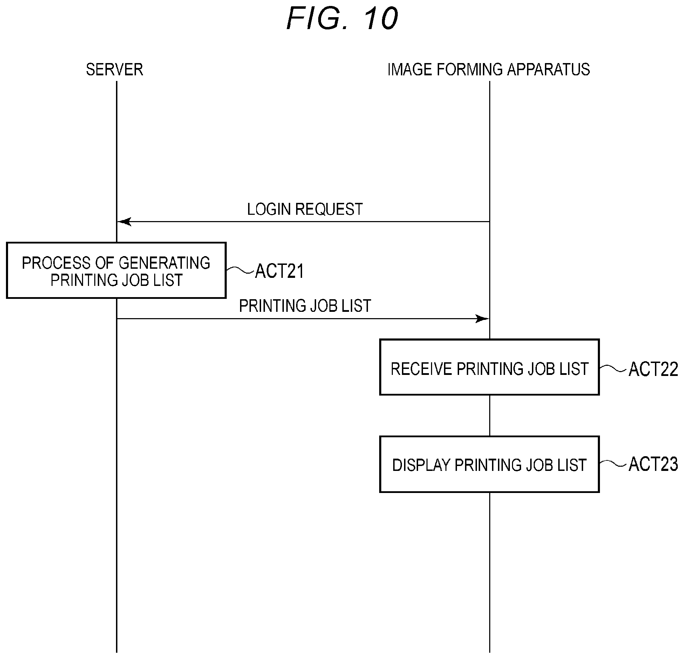

FIG. 10 is a sequence diagram illustrating a process related to a printing job list.

The processing circuit 111 of the image forming apparatus 1 causes the display device 121 to display a login screen based on start of an application program. The login screen is an image for inputting login information via the input device 36. The login information includes an account. The login information may include a password. The processing circuit 111 transmits a login request including the login information to the server 2 in response to an input of the login information.

The processing circuit 21 of the server 2 executes a process of generating a printing job in response to the login request (ACT21). In ACT21, for example, the processing circuit 21 generates a printing job list.

The printing job list when a logged-in account is the master account will be described. One or more printing jobs that can be executed by the logged-in account include one or both of one or more printing jobs that are issued by the master account and one or more printing jobs that are issued by the slave account can be executed by the master account. Hereinafter, a printing job that is issued by the master account is referred to as a first printing job. A printing job that is issued by the slave account and can be executed by the master account is also referred to as a second printing job. One or more first printing jobs are all the printing jobs that are issued by the master account. One or more second printing jobs are all the printing jobs that are issued by the slave account and can be executed by the master account.

A case in which the master account issues at least one printing job will be described. In this case, one or more printing jobs that can be executed by the logged-in account include one or more first printing jobs. A case in which the master account does not issue even one printing job will be described. In this case, one or more printing jobs that can be executed by the logged-in account do not include even one first printing job.

A case in which the slave account permits the master account to execute at least one printing job issued by the slave account will be described. In this case, one or more printing jobs that can be executed by the logged-in account include one or more second printing jobs. A case in which the slave account does not issue even one printing job or a case in which the slave account does not permit the master account to execute any printing job issued by the slave account also will be described. In this case, one or more printing jobs that can be executed by the logged-in account do not include even one second printing job.

A printing job list when the logged-in account is the slave account will be described. One or more printing jobs that can be executed by the logged-in account include one or both of one or more printing jobs that are issued by the slave account and can be executed by the slave account and one or more printing jobs that are issued by the master account and can be executed by the slave account. Hereinafter, a printing job that is issued by the slave account and can be executed by the slave account is also referred to as a third printing job. A printing job that is issued by the master account and can be executed by the slave account is also referred to as a fourth printing job. One or more third printing jobs are all the printing jobs that are issued by the slave account and can be executed by the slave account. One or more fourth printing jobs are all the printing jobs that are issued by the master account and can be executed by the slave account.

A case in which the slave account permits the slave account to execute at least one printing job issued by the slave account will be described. In this case, one or more printing jobs can be executed by the logged-in account include one or more third printing jobs. A case in which the slave account does not issue even one printing job or a case in which the slave account does not permit the slave account to execute any printing job issued by the slave account will be described. In this case, one or more printing jobs that can be executed by the logged-in account do not include even one third printing job.

A case in which the master account permits the slave account to execute at least one printing job issued by the master account will be described. In this case, one or more printing jobs that can be executed by the logged-in account include one or more fourth printing jobs. A case in which the master account does not issue even one printing job or a case in which the master account does not permit the slave account to execute any printing job issued by the master account will be described. In this case, one or more printing jobs that can be executed by the logged-in account do not include even one fourth printing job.

The processing circuit 111 of the image forming apparatus 1 receives the printing job list from the server 2 (ACT22).

The processing circuit 111 of the image forming apparatus 1 causes the display device 121 to display the received printing job list (ACT23). In ACT23, for example, the processing circuit 111 causes the display device 121 to display each printing job indicated by the printing job list in a selectable manner.

When the user selects a printing job via the input device 122, the processing circuit 111 transmits a request for the selected printing job to the server 2. The processing circuit 111 receives the printing job selected as a response to the request from the server 2. The processing circuit 111 controls the printer unit 17 such that an image is formed on a sheet based on the printing job. The printer unit 17 forms the image based on a printing file on a sheet in accordance with the printing parameters included in the printing job. The processing circuit 111 transmits an ID of the executed printing job to the server 2.

The logged-in account is the slave account and the expense burden of the printing job to be executed is imposed on the slave account in some cases. In these cases, the processing circuit 111 can execute the printing job after a specified fee is collected through a coin controller or the like in conjunction with the image forming apparatus 1.

The processing example of the above-described ACT21 will be described.

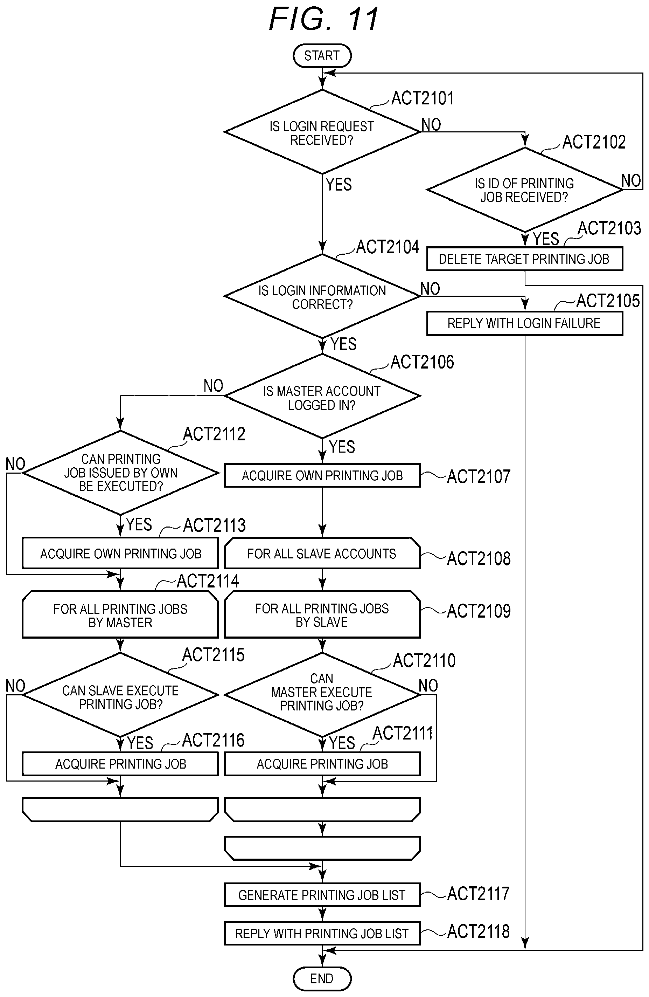

FIG. 11 is a flowchart illustrating a process of generating a printing job list by the server 2.

The processing circuit 21 determines whether to receive a login request from the image forming apparatus 1 (ACT2101). When the login request is not received (NO in ACT2101), the process transitions from ACT2101 to ACT2102. When the login request is received (YES in ACT2101), the process transitions from ACT2101 to ACT2104.

The processing circuit 21 determines whether an identification (ID) of a printing job is received from the image forming apparatus 1 (ACT2102). When the image forming apparatus 1 executes the printing job, the processing circuit 21 receives the ID of the executed printing job from the image forming apparatus 1. When the ID of the printing job is not received (NO in ACT2102), the process transitions from ACT2102 to ACT2101. When the ID of the printing job is received (YES in ACT2102), the process transitions from ACT2102 to ACT2103.

The processing circuit 21 deletes the target printing job (ACT2103). In ACT2103, for example, the processing circuit 21 deletes the target printing job indicated by the received ID from the printing job storage area 232.

The processing circuit 21 determines whether the login information included in the login request is correct (ACT2104). In ACT2104, for example, the processing circuit 21 compares an account included in the login information with information stored in the account storage area 231. When the login information includes a password, the processing circuit 21 compares the password included in the login information with information stored in the account storage area 231. When the login information is not correct (NO in ACT2104), the process transitions from ACT2104 to ACT2105. When the login information is correct (YES in ACT2104), the process transitions from ACT2104 to ACT2106.

The processing circuit 21 replies with information indicating a login failure (ACT2105). ACT2105 may be a process performed by the communication processing unit 211. In ACT2105, for example, the processing circuit 21 transmits the information indicating the login failure as a response to the login request to the image forming apparatus 1.

The processing circuit 21 determines whether the logged-in account is a master account based on the account included in the login information (ACT2106). In ACT2106, for example, the processing circuit 21 determines whether the logged-in account is the master account based on the logged-in account and information stored in the account storage area 231. When the logged-in account is the master account (YES in ACT2106), the process transitions from ACT2106 to ACT2107. When the logged-in account is not the master account (NO in ACT2106), the process transitions from ACT2106 to ACT2112. The case in which the logged-in account is not the master account corresponds to a case in which the logged-in account is a slave account.

When the logged-in account is the master account, the processing circuit 21 processes ACT2107 to ACT2111. ACT2107 to ACT2111 may be processes performed by the generation unit 216.

The processing circuit 21 acquires all the printing jobs associated with the logged-in master account from the printing job storage area 232 (ACT2107). In ACT2107, for example, the processing circuit 21 acquires all the printing jobs in which the logged-in master account is associated as an account issuing the printing jobs. The acquired printing jobs correspond to the above-described first printing job. In this way, the processing circuit 21 can acquire one or more first printing jobs.

The processing circuit 21 processes ACT2109 to be described below on all the slave accounts (ACT2108).

The processing circuit 21 processes ACT2110 and ACT2111 to be described below on all the printing jobs in which the slave account is associated as an account issuing a printing job (ACT2109). Hereinafter, a printing job in which a slave account is associated as an account issuing a printing job is also referred to as a printing job of a slave account.

The processing circuit 21 determines whether the logged-in master account can execute a printing job of the slave account (ACT2110). In ACT2110, for example, the processing circuit 21 refers to information stored in the printing job storage area 232. When the logged-in master account is associated with a printing job of a slave account as an account in which execution of the printing job is permitted, the processing circuit 21 determines that the printing job can be executed. When the logged-in master account is not associated with the printing job of a slave account as an account in which execution of the printing job is permitted, the processing circuit 21 determines that the printing job cannot be executed.

When the logged-in master account can execute the printing job of the slave account (YES in ACT2110), the process transitions from ACT2110 to ACT2111. When the logged-in master account cannot execute the printing job of the slave account (NO in ACT2110), the processing circuit 21 processes ACT2110 on a subsequent printing job.

The processing circuit 21 acquires the printing job determined to be executable from the printing job storage area 232 (ACT2111). The printing job determined to be executable corresponds to the above-described second printing job.

The processing circuit 21 acquires all the printing jobs determined to be executable by processing ACT2108 to ACT2111. Accordingly, the processing circuit 21 can acquire one or more second printing jobs.

When the logged-in account is the slave account, the processing circuit 21 processes ACT2112 to ACT2116. ACT2112 to ACT2116 may be processes performed by the generation unit 216.

The processing circuit 21 determines whether the logged-in slave account can execute the printing job issued by the own account (ACT2112). In ACT2112, for example, the processing circuit 21 refers to the second execution authority setting information associated with the logged-in slave account stored in the account storage area 231.

When the logged-in slave account sets the second execution authority, the processing circuit 21 determines that the logged-in slave account can execute a printing job issued by the own account. When the logged-in slave account does not set the second execution authority, the processing circuit 21 determines that the logged-in slave account cannot execute the printing job issued by the own account.

When the logged-in slave account can execute the printing job issued by the own account (YES in ACT2112), the process transitions from ACT2112 to ACT2113. When the logged-in slave account cannot execute the printing job issued by the own account (NO in ACT2112), the process transitions from ACT2112 to ACT2114.

The processing circuit 21 acquires all the printing jobs issued by the logged-in slave account from the printing job storage area 232 (ACT2113). In ACT2113, for example, the processing circuit 21 acquires all the printing jobs in which the logged-in slave account is associated as an account issuing the printing jobs and an account permitted to execute the printing jobs. The acquired printing jobs correspond to the above-described third printing job. In this way, the processing circuit 21 can acquire one or more third printing jobs.

The processing circuit 21 processes ACT2115 and ACT2116 to be described below on all the printing jobs in which the master account is associated as an account issuing the printing jobs (ACT2114). Hereinafter, a printing job in which a master account is associated as an account issuing the printing job is also referred to as a printing job of the master account.

The processing circuit 21 determines whether the logged-in slave account can execute a printing job of the master account (ACT2115). In ACT2115, for example, the processing circuit 21 refers to information stored in the printing job storage area 232. When the logged-in slave account is associated with the printing job of the master account as an account permitted to execute the printing job, the processing circuit 21 determines that the slave account can execute the printing job. When the logged-in slave account is not associated with the printing job of the master account as an account permitted to execute the printing job, the processing circuit 21 determines that the slave account cannot execute the printing job.

When the logged-in slave account can execute the printing job of the master account (YES in ACT2115), the process transitions from ACT2115 to ACT2116. When the logged-in slave account cannot execute the printing job of the master account (NO in ACT2115), the processing circuit 21 processes ACT2115 on a subsequent printing job.

The processing circuit 21 acquires the printing job determined to be executable from the printing job storage area 232 (ACT2116). The printing job determined to be executable corresponds to the above-described fourth printing job.

The processing circuit 21 acquires all the printing jobs determined to be executable by processing ACT2114 to ACT2116. Accordingly, the processing circuit 21 can acquire one or more fourth printing jobs.

The processing circuit 21 generates a printing job list (ACT2117). ACT2117 may be a process performed by the generation unit 216. When the logged-in account is the master account, the processing circuit 21 generates a printing job list that includes one or both of one or more first printing jobs and one or more second printing jobs. When the logged-in account is the slave account, the processing circuit 21 generates a printing job list that includes one or both of one or more third printing jobs and one or more fourth printing jobs.

The processing circuit 21 replies with the printing job list (ACT2118). ACT2118 may be a process performed by the communication processing unit 211. In ACT2118, for example, the processing circuit 21 transmits the printing job list as a response to the login request to the image forming apparatus 1.

As described above, the server 2 can set one or both of an issuing authority of a printing job in a slave account and an execution authority of the printing job related to the slave account.

Accordingly, the server 2 can separately manage the authorities to issue a printing job and to execute the printing job with regard to a slave account. The printing job can be shared between the master account and the slave account. Therefore, the printing job issued by each of the master account and the slave account can be executed by each of the master account and the slave account. Accordingly, the server 2 can flexibly set the authorities related to printing.

As described above, the execution authority can include a first execution authority in the master account for the printing job issued by the slave account.

Accordingly, for example, a visitor who has a slave account can issue a printing job for a material. A host that has a master account can permit the image forming apparatus 1 to execute the printing job so that the image forming apparatus 1 can print the material. In this way, this is effective when the image forming apparatus 1 is in a security area and a visitor cannot use the image forming apparatus 1.

As described above, the execution authority can include the second execution authority in the slave account for the printing job issued by the slave account.

Accordingly, for example, a coworking space owner who has the master account can permit a user who has the slave account to use the issuing authority and the execution authority.

As described above, the execution authority can include a third execution authority in the slave account for a printing job issued by the master account.

Accordingly, for example, a telecommuter who has the master account can request a commuter who has the slave account to perform printing.

As described above, the server 2 can set expense burden in association with execution of a printing job related to the slave account.

Accordingly, the server 2 can flexibly set the expense burden.

As described above, when the logged-in account is the master account, the server 2 can transmit the printing job list including one or both of one or more first printing jobs and one or more second printing jobs to the image forming apparatus 1.

Accordingly, the server 2 can present a printing job issued by the master account to a user who has the master account. The server 2 can present a printing job that is issued by the slave account and can be executed by the master account to a user who has the master account.

As described above, when the logged-in account is the slave account, the server 2 can transmit the printing job list including one or both of one or more third printing jobs and one or more fourth printing jobs to the image forming apparatus 1.

Accordingly, the server 2 can present a printing job that is issued by the slave account and can be executed by the slave account to a user who has the slave account. The server 2 can present a printing job that is issued by the master account and can be executed by the slave account to the user who has the slave account.

### [Other Embodiments]

In the above-described embodiment, the auxiliary storage device 23 of the server 2 includes the account storage area 231 and the printing job storage area 232 as an example, but an exemplary embodiment is not limited thereto. Instead of the server 2, the auxiliary storage device 113 of the image forming apparatus 1 may store information stored in the account storage area 231 and information stored in the printing job storage area 232. In this example, instead of the server 2, the processing circuit 111 of the image forming apparatus 1 executes the same processes as the processes executed by the processing circuit 21 of the server 2.

The above-described application program may be integrated with a printer driver.

The terminal 3 may implement a function of acquiring and viewing the printing job list or may implement changing and deleting of a printing job issued by the own terminal in accordance with the application program.

The slave account is not limited to new issuing. The slave account may be an existing account designated as a slave account.

The above-described embodiment may be applied to a method executed by a system. The above-described embodiment may be applied to a program that can cause a computer of a system to execute each function. The above-described embodiment may be applied to a recording medium that stores the program.

Each of one or more circuits included in a processing circuit performs one or more processes among a plurality of processes. When the processing circuit is configured with a single circuit, the single circuit performs all of a plurality of processes. When the processing circuit is configured with a plurality of circuits, each of the plurality of circuits performs some of a plurality of processes. Some of the plurality of processes may be one of a plurality of processes or two or more of the plurality of processes. When the processing circuit is configured with a plurality of circuits, the plurality of circuits may be included in one apparatus or may be distributed to a plurality of apparatuses.

The program may be transferred in a state in which the program is stored in an electronic apparatus according to an embodiment or may be transferred in a state in which the program is not stored in an electronic apparatus. In the latter case, the program may be transferred via a network or may be transferred in a state where the program is recorded on a recording medium. The recording medium is a non-transitory medium. The recording medium is a computer-readable medium. The recording medium may be a computer-readable medium capable of storing a program, such as a CD-ROM or a memory card and a specific form of the recording medium does not matter.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the spirit of the disclosure. The accompanying claims and their equivalents are intended to cover such forms or modifications as would fall within the scope and spirit of the disclosure.

The above-described embodiments may be expressed as follows.
(1) An information processing apparatus including:
   a communication processing unit configured to receive information regarding issuing of a second account associated with a first account input by a terminal; and
   a setting unit configured to set one or both of an issuing authority of a printing job in the second account and an execution authority for the printing job related to the second account based on the information received by the communication processing unit.
(2) The apparatus according to (1), wherein the execution authority includes an execution authority in the first account for a printing job issued by the second account.
(3) The apparatus according to (1) or (2), wherein the execution authority includes an execution authority in the second account for a printing job issued by the first account.
(4) The apparatus according to any one of (1) to (3), wherein the setting unit sets expense burden associated with execution of a printing job related to the second account based on the information received by the communication processing unit.
(5) An information processing system including:
   an information processing apparatus; and
   an image forming apparatus,
   wherein the information processing apparatus includes
      a communication processing unit that receives information regarding issuing of a second account associated with a first account input by a terminal,
      a setting unit that sets one or both of an issuing authority of a printing job in the second account and an execution authority for the printing job related to the second account based on the information received by the communication processing unit, and
      a storage unit that storages the printing job,
   wherein the image forming apparatus includes a processing unit that receives a list indicating one or more printing jobs executable with a logged-in account from the information processing apparatus and causes a display unit to display the list.
(6) An information processing method causing a computer to execute:
   receiving information regarding issuing of a second account associated with a first account input by a terminal; and
   setting one or both of an issuing authority of a printing job in the second account and an execution authority for the printing job related to the second account based on the received information.

## Claims

1. An information processing apparatus comprising:
one or more processors configured to:
receive information regarding issuing of a second account associated with a first account input by a terminal; and
set one or both of an issuing authority of a printing job in the second account and an execution authority for the printing job related to the second account based on the information received by the communication processing unit.

2. The apparatus according to claim 1, wherein the execution authority includes an execution authority in the first account for a printing job issued by the second account.

3. The apparatus according to claim 1 or 2, wherein the execution authority includes an execution authority in the second account for a printing job issued by the first account.

4. The apparatus according to any one of claims 1 to 3, wherein the one or more processors:
set expense burden associated with execution of a printing job related to the second account based on the received information.

5. An information processing system comprising:
an information processing apparatus; and
an image forming apparatus,
wherein the information processing apparatus includes one or more processors to:
receive information regarding issuing of a second account associated with a first account input by a terminal,
set one or both of an issuing authority of a printing job in the second account and an execution authority for the printing job related to the second account based on the information received by the communication processing unit, and
store the printing job,
wherein the image forming apparatus includes one or more processors to:
receive a list indicating one or more printing jobs executable with a logged-in account from the information processing apparatus; and
cause a display unit to display the list.

6. The system according to claim 5, wherein the execution authority includes an execution authority in the first account for a printing job issued by the second account.

7. The system according to claim 5 or 6, wherein the execution authority includes an execution authority in the second account for a printing job issued by the first account.

8. The system according to any one of claims 5 to 7, wherein one or more processors of the information processing apparatus is configured to set expense burden associated with execution of a printing job related to the second account based on the received information.

9. An information processing method causing a computer to execute:
receiving information regarding issuing of a second account associated with a first account input by a terminal; and
setting one or both of an issuing authority of a printing job in the second account and an execution authority for the printing job related to the second account based on the received information.

10. The method according to claim 9, wherein the execution authority includes an execution authority in the first account for a printing job issued by the second account.

11. The method according to claim 9 or 10, wherein the execution authority includes an execution authority in the second account for a printing job issued by the first account.

12. The method according to any one of claims 9 to 11, further comprising:
setting expense burden associated with execution of a printing job related to the second account based on the received information.
